# EUROPEAN PATENT APPLICATION

(11) **EP 4 467 033 A1**
(43) Date of publication of application: **27.11.2024**
(21) Application number: 24175661.8
(22) Date of filing: 14.05.2024
(51) Int. Cl.: A43B 7/142, A43B 7/143, A43B 13/04, A43B 13/12, A43B 13/14

(54) **BALANCE FOOTWEAR WITH SHANK**

(30) Priority: 23.05.2023 NL 2034893
(71) Applicant: BV Nimco Schoenfabriek J.Verschuur & Co., 6572 AK Berg en Dal (NL)
(72) Inventor: SMITS, Carolus Hubertus Johannes Servatius, deceased (NL); FRANCO, Claudio, 31044 MONTEBELLUNA (TV) (IT)
(74) Representative: EP&C

(57) **Abstract**

An injection moulded balance footwear 100 comprising an upper 101 and a shoe sole 102 which has an convex bottom profile forming an impact region IR in a midfoot region MR. The shoe sole 102 comprises an outsole 1, a midsole 2 connected to the outsole by injection moulding and an embedded shank 3 which is configured to stabilise a wearer's foot. The shank 3 has a U-shaped shank body 30 including a U-bend portion 33 being positioned at a heel region HR, a first U-leg 31 and a second U-leg 32 extending from the heel region HR through the midfoot region MR into a forefoot region FR. The shank 3 has a bridge portion 34 at the midfoot region MR which interconnects the first and second U-leg 31, 32. The shank is improved in that the bridge portion 34 protrudes below the U-shaped shank body 30.

## Description

The present invention relates to balance footwear, in particular to a balance shoe sole for use in footwear arranged with a midfoot impact region. The invention further relates to a method of manufacturing balance footwear by injection moulding. In particular, the invention relates to a method of manufacturing a balance shoe sole by injection moulding.

Footwear generally includes a shoe sole and an upper body, simply called an upper, which is fixed to the shoe sole. A particular category of footwear is designed to provide a rolling action on a user's foot. This category of footwear is called balance footwear. This footwear has a convex shaped shoe sole to stimulate a balancing and rolling action. Someone wearing the balance footwear balances on his feet about a foot arch supporting part. The shoe sole generally includes a relatively soft material in the heel region and toe region of the shoe sole and has a relative hard material in a middle region of the shoe sole. An example of such a balance shoe sole is disclosed in JP4647322B2 in the name of Nosaka.

This type of footwear stimulates a more active response from the user's muscular and skeleton system in comparison with general walking or running shoes. The activation provides a lot of benefits, including training muscles that are otherwise typically neglected, improving posture and gait pattern and alleviating back, hip, leg and foot ailments as well as joint, muscle, ligament and tendon injuries.

A balance shoe sole for a balance footwear can be manufactured by an adhesive process in which several prefabricated parts are attached together. The balance shoe sole comprises an outsole and a midsole which are prefabricated parts. The outsole defines a ground-contacting surface of the shoe sole. When assembling the balance shoe sole, the lower surface of the midsole is attached by a heating or glueing process to an outsole. The midsole provides support to the user and can be attached to an insole or a shoe upper.

Instead of an adhesive process, a shoe sole can also be manufactured by injection moulding. US3757437 discloses an injection moulding process for manufacturing a shoe. An upper body and a sole are then mould together. The injection of sole material forms a sole bonded to the upper. An adhesive process is generally carried out for relatively small volumes, while injection moulding of shoes is generally carried out for mass production.

US2016345668A in the name of Masai Int Pte Ltd discloses a shoe sole for balance footwear including a midsole and an outsole. The outsole defines a ground-contacting surface of the sole and is prefabricated from a relatively hard, abrasion-resistant material. The midsole extends from the heel of the sole to the toe of the sole and includes an upper surface for attachment to at least one of an insole and the shoe upper. The outsole may be co-moulded with a lower surface of the midsole to provide a relatively lightweight construction, and to provide a balance of wear and flexibility.

The midsole has a three-piece construction and comprises a forefoot cushioning element, a heel cushioning element and a midfoot cushioning element out of different materials.

The shoe sole further includes a reinforcing element which is embedded within the midsole. The reinforcing element may be embedded in the midsole by moulding the midsole around the reinforcing element. The reinforcing element generally has a U-shape and includes a first prong and a second prong. Each prong extends in the longitudinal direction from the heel region, through the midfoot region and into the forefoot region to provide stiffness. The reinforcing element may have at least one cross-member which extends between and interconnects the first and second prong.

A drawback of this balance shoe sole is that the manufacturing of it is relatively complex. The manufacturing requires a plurality of prefabricated parts to be accurately positioned before co-moulding the parts together. It is desired to provide a balance footwear, in particular a balance shoe sole, which can be manufactured in a more simple manner.

KR100835732B1 discloses an arc shaped shoe sole which has a broad support surface formed on a bottom of a support portion which is integrally formed to protrude downwardly from a center portion of a hard midsole being embedded in an inner side of the shoe sole.

Regarding the above-mentioned prior art, it is remarked that any discussion of documents, acts, materials, devices, articles or the like included in the present specification is for the purpose of providing a context for the present invention, and is not to be taken as an admission that any such matters form part of the prior art or were before the priority date of each claim of this application common general knowledge in the field relevant to the present invention.

The general object of the present invention is to at least partially eliminate the above mentioned drawback and/or to provide a usable alternative. More specific, it is an object of the invention to provide a balance footwear, in particular a balance shoe sole, which can be manufactured in a simple and accurate manner.

According to the invention, this object is achieved by a balance footwear according to claim 1.

The balance footwear is arranged to be manufactured by injection moulding. The balance footwear is designed to provide a rolling action on a user's foot. The balance footwear comprises an upper and a shoe sole. The shoe sole extends in a longitudinal direction from a heel region through a midfoot region to a forefoot region. The shoe sole has a convex bottom profile. The convex bottom profile provides an impact region of the shoe sole. The impact region of the shoe sole is defined in the midfoot region. Preferably, the shoe sole includes a relatively soft material in the heel region and toe region of the shoe sole and a relative hard material in a middle region of the shoe sole.

The shoe sole comprises an outsole, midsole and shank embedded in the midsole.

The outsole of the shoe sole has an outsole body having a lower surface defining a ground-contacting surface of the shoe sole. The outsole has an upper surface for supporting the midsole. Preferably, the outsole is made of a single material, for example a rubber material.

The midsole of the shoe sole has a midsole body which is connected to the outsole by injection moulding. The midsole has a midsole upper surface for attachment to at least one of an insole and the upper.

The shank of the shoe sole is arranged to stabilise a wearer's foot. The shank is a supportive structure between the shoe's insole and outsole that runs underneath the arch of the foot and provides most of the structure under the arch of the foot. The shank is embedded in the midsole. The shank has a U-shaped shank body. The U-shape has a U-bend portion, a first U-leg and a second U-leg. The U-bend portion is positioned at the heel region of the shoe sole. The first and second U-leg extend from the heel region through the midfoot region into the forefoot region. The shank has a bridge portion at the midfoot region which interconnects the first and second U-leg.

According to the invention, an improvement is obtained in that the bridge portion protrudes below the U-shaped shank body. In a subassembly of the outsole and the shank, the bridge portion extends from the U-shaped shank body to the outsole. The bridge portion is positioned in between the U-shaped shank body and the outsole.

The protruding bridge portion is beneficial in that it provides a rigidity to the shoe sole at the midfoot region. A load can effectively be transferred by the bridge portion from the shank to the impact region of the shoe sole. Herewith, the shoe sole provides a proper support to a wearer's foot.

According to an aspect of the invention, the bridge portion of the shank is formed by a deepening. The deepening may have a cup-shape. The deepening is open from above. The deepening has a bottom wall and a circumferential sidewall. Preferably, the deepening is box-shaped. The circumferential sidewall comprises a front, rear, left and right wall portion. Seen from above, the box-shaped deepening has a substantially rectangular cross-section.

In an embodiment of the balance footwear according to the invention, in a subassembly of the outsole and a shank, the bridge portion of the shank is in abutting engagement with the outsole. The shank is directly supported by the outsole. The bridge portion fully extends in between the U-shaped shank body and the outsole.

An exerted load on the shank is directly transferred through the bridge portion to the midfoot region of the outsole. Herewith, instead of a load transfer through a midsole portion, a direct transfer by the bridge portion to the outsole is beneficial in allowing the shoe sole to perform according to predefined support requirements. In contrast to a load transfer via a midsole portion which might soften over time, a load transfer through the bridge portion of the shank is beneficial in maintaining this required support over a lifetime of the shoe sole.

It may be further beneficial that the direct support of the shank on the outsole provides an accurate positioning of the shank when the subassembly is placed in a mould. The height level of the shank body is determined by the height of the protruding bridge portion. Herewith, a shoe sole can be manufactured by injection moulding wherein the shank is properly positioned and embedded in a midsole in compliance with predefined technical requirements.

In an embodiment of the balance footwear according to the invention, the bridge portion comprises at least one alignment member. Preferably, the at least one alignment member is an alignment aperture. The alignment member is arranged to align the shank relative to the outsole. The alignment member is arranged to position the bridge portion relative to a complementary alignment member of the outsole. The complementary alignment member is positioned at the midfoot region of the upper surface of the outsole. The at least one alignment member of the shank engages to at least one complementary alignment member at the outsole to position the shank relative to a centre line which extends in the longitudinal direction of the shoe sole. By the at least one alignment member, the shank is restrained in rotation and positioned in a lateral and longitudinal direction relative to the centre line of the outsole.

In an embodiment of the balance footwear according to the invention, the complementary alignment member at the upper surface of the outsole is formed by a positioning pin. Preferably, the positioning pin has a narrowed pin head. An annular pin end face is provided by the narrowed pin head for supporting the shank in a vertical direction. By placing the pin head inside an alignment aperture of the shank, the shank is constrained in lateral and/or longitudinal direction.

In an embodiment of the balance footwear according to the invention, the outsole further comprises at least one support member for supporting the shank onto the outsole. Preferably, the at least one support member is positioned at the heel region of the outsole for supporting the U-bend portion of the shank. At least one additional support member may be positioned at a forefoot region of the outsole to support respectively one of the first and second U-leg of the shank. In particular, each support member is pin-shaped. Each pin-shaped support member extends from the upper surface of the outsole and has a pin end face for supporting the shank.

In an embodiment of the balance footwear according to the invention, the bridge portion of the shank is integral with the shank body. The shank is a one-piece item including the U-shaped shank body and the bridge portion. Preferably, the shank is made by injection moulding of a thermoplastic material, e.g. a polypropylene material.

In an embodiment of the balance footwear according to the invention, the deepening is open worked by at least one aperture. The deepening may be open worked by perforations. In particular, the deepening is box-shaped in which the bottom wall has at least one aperture. The at least one aperture may function as an alignment member has described above to align the shank relative to the outsole. Preferably, the at least one aperture is window shaped. In particular, the bottom wall of the deepening is open worked by four window shaped apertures. The four window shaped apertures form a cross-bar in the bottom wall which provides rigidity.

In an embodiment of the balance footwear according to the invention, the deepening has an open worked circumferential sidewall. In particular, the sidewall includes at least one window-shaped aperture. The window-shaped apertures form at least one stud for interconnecting the bottom wall to the shank body. In particular, the window-shaped apertures form corner studs. The corner studs contribute to a lightweight structure and provide rigidity to the bottom wall for a load transfer from the shank body through the studs to the bottom wall of the bridge portion.

In an embodiment of the balance footwear according to the invention, the shank is made of a plastic material. In particular, the shank is made of a thermoplastic polyurethane material.

In an embodiment of the balance footwear according to the invention, the outsole comprises a balance body on the ground-contacting surface. The balance body is positioned at the midfoot region. In particular, the balance body is a balance pad. The balance body may be glued to the lower surface of the outsole body. The balance body provides a predefined impact region at the ground-contacting surface of the outsole.

In an embodiment of the balance footwear according to the invention, the outsole comprises a multilayer outsole body. The outsole body may be a prefabricated item including a stack layers out of elastic material.

Thus, an injection moulded balance footwear is provided comprising an upper and a shoe sole which has an convex bottom profile forming an impact region in a midfoot region. The shoe sole comprises an outsole, a midsole connected to the outsole by injection moulding and an embedded shank which is configured to stabilise a wearer's foot. The shank has a U-shaped shank body including a U-bend portion being positioned at a heel region, a first U-leg and a second U-leg extending from the heel region through the midfoot region into a forefoot region. The shank has a bridge portion at the midfoot region which interconnects the first and second U-leg. The shank is improved in that the bridge portion protrudes below the U-shaped shank body.

Further, the invention relates to a balance shoe sole formed by injection moulding. The balance shoe sole extends in a longitudinal direction from a heel region through a midfoot region to a forefoot region. The balance shoe sole has a convex bottom profile. The convex bottom profile provides an impact region of the balance shoe sole. The impact region of the balance shoe sole is defined in the midfoot region. Preferably, the balance shoe sole includes a relatively soft material in the heel region and toe region of the balance shoe sole and a relative hard material in a middle region of the balance shoe sole.

The balance shoe sole comprises an outsole, midsole and shank embedded in the midsole.

The outsole of the balance shoe sole has an outsole body having a lower surface defining a ground-contacting surface of the shoe sole. The outsole has an upper surface for supporting the midsole.

The midsole of the balance shoe sole has a midsole body which is connected to the outsole by injection moulding. The midsole has a midsole upper surface for attachment to at least one of an insole and the upper.

The shank of the balance shoe sole is arranged to stabilise a wearer's foot. The shank is embedded in the midsole. The shank has a U-shaped shank body. The U-shape has a U-bend portion, a first U-leg and a second U-leg. The U-bend portion is positioned at the heel region of the shoe sole. The first and second U-leg extend from the heel region through the midfoot region into the forefoot region. The shank has a bridge portion at the midfoot region which interconnects the first and second U-leg.

According to the invention, an improvement is obtained in that the bridge portion protrudes below the U-shaped shank body. In a subassembly of the outsole and the shank, the bridge portion extends from the U-shaped shank body to the outsole. The bridge portion is positioned in between the U-shaped shank body and the outsole.

The protruding bridge portion is beneficial in that it provides a rigidity to the shoe sole at the midfoot region. A load can effectively be transferred by the bridge portion from the shank to the impact region of the shoe sole. Herewith, the shoe sole provides a proper support to a wearer's foot.

Further, the invention relates to a shank for manufacturing a balance footwear by injection moulding of a midsole, wherein the shank comprises a U-shaped shank body including a U-bend portion to be positioned at a heel region, a first U-leg and a second U-leg to extend from the heel region through a midfoot region into a forefoot region of a shoe sole, wherein the shank has a bridge portion at the midfoot region which interconnects the first and second U-leg, characterised in that the bridge portion protrudes below the U-shaped shank body.

Further, the invention relates to a method for manufacturing a balance shoe sole sole or balance footwear by injection moulding. The method comprises a step of placing a subassembly of an outsole and shank in a mould, wherein the shank has a bridge portion which extends below a U-shaped shank body. In a step of the method, an injection moulding material is supplied into the mould to form a midsole on an upper surface of the outsole. By supplying the injection moulding material, the shank is embedded in the midsole. The shank may be fully embedded in the midsole.

In an embodiment of the method according to the invention, the shank rests upon an upper surface of the outsole when placing the subassembly in the mould. The outsole supports the shank. In particular, the bridge portion of the shank rests upon the outsole. Preferably, in the subassembly, an engagement of the bridge portion with the outsole outlines the shank relative to the outsole.

According to an aspect of the invention, the invention relates to a balance footwear which is configured to be manufactured by injection moulding, which balance footwear comprises an upper and a shoe sole which extends in a longitudinal direction from a heel region through a midfoot region to a forefoot region, wherein the shoe sole has an convex bottom profile such that an impact region of the shoe sole is defined in the midfoot region, the shoe sole comprises an outsole, a midsole and a shank embedded in the midsole, wherein:
- the outsole has an outsole body having a lower surface defining a ground-contacting surface of the shoe sole and an upper surface for supporting the midsole;
- the midsole has a midsole body being connected to the outsole by injection moulding and wherein the midsole has a midsole upper surface for attachment to at least one of an insole and the upper; and
- the shank for stabilising a wearer's foot is embedded in the midsole, wherein the shank has a H-shaped shank body, a first H-leg and a second H-leg extending from the heel region through the midfoot region into the forefoot region, wherein the shank has a bridge portion at the midfoot region which interconnects the first and second H-leg, characterised in that the bridge portion protrudes below the H-shaped shank body.

The first and second H-leg provide stability to the heel and forefoot portion in the longitudinal direction. The interconnecting bridge portion protrudes below the H-shaped body to provide rigidity to the shoe sole at the midfoot region.

In an embodiment of the balance footwear a subassembly of the outsole and the shank, the bridge portion of the shank is in abutting engagement with the outsole.

In an embodiment of the balance footwear, the bridge portion comprises at least one alignment member, in particular an alignment aperture, to position the bridge portion relative to a complimentary alignment member being positioned at the midfoot region of the upper surface of the outsole.

In an embodiment of the balance footwear, the complementary alignment member at the upper surface of the outsole is formed by a positioning pin, in particular a positioning pin having a narrowed pin head.

In an embodiment of the balance footwear, the outsole further comprises at least one support member for supporting the shank onto the outsole, wherein in particular the at least one support member is arranged to support a U-leg of the shank.

In an embodiment of the balance footwear, the bridge portion of the shank is integral with the shank body.

In an embodiment of the balance footwear, the bridge portion of the shank is formed by a deepening which is open from above.

In an embodiment of the balance footwear, the deepening is open worked by at least one aperture.

In an embodiment of the balance footwear, the deepening is box-shaped including a bottom wall and a circumferential side wall.

In an embodiment of the balance footwear, the circumferential sidewall of the deepening has at least one aperture, in particular a window shaped aperture, forming several studs, in particular several corner studs, for a load transfer from the shank body through the studs to the bottom wall of the bridge portion.

In an embodiment of the balance footwear, the shank is made of a plastic material, in particular a thermoplastic polyurethane material.

In an embodiment of the balance footwear, the outsole comprises a balance body, in particular a balance pad, on the ground-contacting surface which balance body is positioned at the midfoot region.

According to an aspect of the invention, the invention relates to a balance shoe sole formed by injection moulding, wherein the balance shoe sole extends in a longitudinal direction from a heel region through a midfoot region to a forefoot region, wherein the balance shoe sole has an convex bottom profile such that an impact region of the balance shoe sole is defined in the midfoot region, the balance shoe sole comprises an outsole, a midsole and a shank embedded in the midsole, wherein:
- the outsole has an outsole body having a lower surface defining a ground-contacting surface of the shoe sole and an upper surface for supporting the midsole;
- the midsole has a midsole body being connected to the outsole by injection moulding and wherein the midsole has a midsole upper surface for attachment to at least one of an insole and the upper; and
- the shank for stabilising a wearer's foot is embedded in the midsole, wherein the shank has a H-shank body including a H-bend portion being positioned at the heel region, a first H-leg and a second H-leg extending from the heel region through the midfoot region into the forefoot region, wherein the shank has a bridge portion at the midfoot region which interconnects the first and second U-leg, characterised in that the bridge portion protrudes below the H-shaped shank body.

According to the aspect of the invention, the invention relates to a shank for manufacturing a balance footwear by injection moulding of a midsole, wherein the shank comprises a H-shaped shank body including a H-bend portion to be positioned at a heel region, a first H-leg and a second H-leg to extend from the heel region through a midfoot region into a forefoot region of a shoe sole, wherein the shank has a bridge portion at the midfoot region which interconnects the first and second H-leg, characterised in that the bridge portion protrudes below the H-shaped shank body.

According to the aspect of the invention, the invention relates to a method for manufacturing a balance shoe sole or balance footwear by injection moulding comprising the steps of:
- placing a subassembly of an outsole and a shank in a mould, wherein the shank has a bridge portion which extends below a H-shaped shank body;
- supply an injection moulding material into the mould to form a midsole on the outsole and to enclose the shank;
- opening the mould for releasing a formed balance shoe sole or balance footwear.

In an embodiment of the method, in the subassembly, the bridge portion of the shank rests upon an upper surface of the outsole.

In an embodiment of the method, in the subassembly, an engagement of the bridge portion to the outsole outlines the shank relative to the outsole.

Embodiments according to aspects of the invention are described by the following clauses:
1. Balance footwear (100) which is configured to be manufactured by injection moulding, which balance footwear comprises an upper (101) and a shoe sole (102) which extends in a longitudinal direction (LD) from a heel region (HR) through a midfoot region (MR) to a forefoot region (FR), wherein the shoe sole has an convex bottom profile such that an impact region (IR) of the shoe sole is defined in the midfoot region (MR), the shoe sole comprises an outsole (1), a midsole (2) and a shank (3) embedded in the midsole (2), wherein:
   - the outsole (1) has an outsole body (10) having a lower surface defining a ground-contacting surface of the shoe sole and an upper surface for supporting the midsole;
   - the midsole (2) has a midsole body (20) being connected to the outsole (1) by injection moulding and wherein the midsole (2) has a midsole upper surface (22) for attachment to at least one of an insole and the upper; and
   - the shank (3) for stabilising a wearer's foot is embedded in the midsole (2), wherein the shank (3) has a U-shaped shank body (30) including a U-bend portion (33) being positioned at the heel region (HR), a first U-leg (31) and a second U-leg (32) extending from the heel region (HR) through the midfoot region (MR) into the forefoot region (FR), wherein the shank (3) has a bridge portion (34) at the midfoot region (MR) which interconnects the first and second U-leg (31, 32), characterised in that the bridge portion (34) protrudes below the U-shaped shank body (30).
2. Balance footwear (100) according to clause 1, wherein in a subassembly of the outsole (1) and the shank (3), the bridge portion (34) of the shank (3) is in abutting engagement with the outsole (1).
3. Balance footwear (100) according to clause 2, wherein the bridge portion (34) comprises at least one alignment member (35), in particular an alignment aperture, to position the bridge portion (34) relative to a complimentary alignment member (15) being positioned at the midfoot region (MR) of the upper surface of the outsole (1).
4. Balance footwear (100) according to clause 3, wherein the complementary alignment member (15) at the upper surface of the outsole (1) is formed by a positioning pin (150), in particular a positioning pin having a narrowed pin head (151).
5. Balance footwear (100) according to any of the clauses 1 - 4, wherein the outsole (1) further comprises at least one support member (16) for supporting the shank (3) onto the outsole (1), wherein in particular the at least one support member (16) is arranged to support a U-leg (31, 32) of the shank (3).
6. Balance footwear (100) according to any of the preceding clauses, wherein the bridge portion (34) of the shank (3) is integral with the shank body (30).
7. Balance footwear (100) according to any of the preceding clauses, wherein the bridge portion (34) of the shank (3) is formed by a deepening (340) which is open from above.
8. Balance footwear (100) according to clause 7, wherein the deepening (340) is open worked by at least one aperture.
9. Balance footwear (100) according to clause 7 or 8, wherein the deepening (340) is box-shaped including a bottom wall (341) and a circumferential side wall (342).
10. Balance footwear (100) according to clause 9, wherein the circumferential sidewall (342) of the deepening has at least one aperture, in particular a window shaped aperture (344), forming several studs (345), in particular several corner studs (346), for a load transfer from the shank body (30) through the studs (345) to the bottom wall of the bridge portion (34).
11. Balance footwear (100) according to any of the preceding clauses, wherein the shank (3) is made of a plastic material, in particular a thermoplastic polyurethane (TPU) material.
12. Balance footwear (100) according to any of the preceding clauses, wherein the outsole (1) comprises a balance body (13), in particular a balance pad, on the ground-contacting surface which balance body (13) is positioned at the midfoot region (MR).
13. Shank (3) for manufacturing a balance footwear by injection moulding of a midsole, wherein the shank comprises a U-shaped shank body (30) including a U-bend portion (33) to be positioned at a heel region (HR), a first U-leg (31) and a second U-leg (32) to extend from the heel region through a midfoot region into a forefoot region of a shoe sole, wherein the shank has a bridge portion (34) at the midfoot region (MR) which interconnects the first and second U-leg (31, 32), characterised in that the bridge portion (34) protrudes below the U-shaped shank body (30).
14. Balance shoe sole (102) formed by injection moulding, wherein the balance shoe sole extends in a longitudinal direction (LD) from a heel region (HR) through a midfoot region (MR) to a forefoot region (FR), wherein the balance shoe sole has an convex bottom profile such that an impact region (IR) of the balance shoe sole is defined in the midfoot region (MR), the balance shoe sole comprises an outsole (1), a midsole (2) and a shank (3) embedded in the midsole (2), wherein:
   - the outsole (1) has an outsole body (10) having a lower surface defining a ground-contacting surface of the shoe sole and an upper surface for supporting the midsole;
   - the midsole (2) has a midsole body (20) being connected to the outsole (1) by injection moulding and wherein the midsole (2) has a midsole upper surface (22) for attachment to at least one of an insole and the upper; and
   - the shank (3) for stabilising a wearer's foot is embedded in the midsole (2), wherein the shank (3) has a U-shaped shank body (30) including a U-bend portion (33) being positioned at the heel region (HR), a first U-leg (31) and a second U-leg (32) extending from the heel region (HR) through the midfoot region (MR) into the forefoot region (FR), wherein the shank (3) has a bridge portion (34) at the midfoot region (MR) which interconnects the first and second U-leg (31, 32), characterised in that the bridge portion (34) protrudes below the U-shaped shank body (30).
15. Method for manufacturing a balance shoe sole (102) according to clause 13 or balance footwear (100) according to any of the clauses 1-12 by injection moulding comprising the steps of:
   - placing a subassembly of an outsole (1) and a shank (3) in a mould, wherein the shank (3) has a bridge portion (34) which extends below a U-shaped shank body (30);
   - supply an injection moulding material into the mould to form a midsole (2) on the outsole (1) and to enclose the shank (3);
   - opening the mould for releasing a formed balance shoe sole or balance footwear.
16. Method according to clause 15, wherein in the subassembly, the bridge portion (34) of the shank (3) rests upon an upper surface (12) of the outsole (1).
17. Method according to clause 15 or 16, wherein in the subassembly, an engagement of the bridge portion (34) to the outsole (1) outlines the shank (3) relative to the outsole (1).

The invention will be explained in more detail with reference to the appended drawings. The drawings show a practical embodiment according to the invention, which may not be interpreted as limiting the scope of the invention. Specific features may also be considered apart from the shown embodiment and may be taken into account in a broader context as a delimiting feature, not only for the shown embodiment but as a common feature for all embodiments falling within the scope of the appended claims, in which:
Fig. 1 shows a prior art balance footwear having an upper and a shoe sole comprising an outsole and a midsole, in which the outsole has a downwardly convex shape forming a centrally positioned impact region to provide a balancing action to a wearer's foot;
Fig. 2 shows a perspective view of a subassembly of a shank stacked on an outsole in an embodiment according to the invention;
Fig. 3 and 4 respectively show a top and a side view of the subassembly as shown in fig. 2;
Fig. 5-7 show respectively a perspective, top and side view of the shank having a U-shaped shank body with a first and second U-leg being interconnected by a bridge portion at a middle region;
Fig. 8 and 9 show respectively an enlarged view of the subassembly and an upper surface of the outsole zooming in on a bridge portion of the shank illustrating alignment members to accurately position the shank on the outsole; and
Fig. 10 shows a side view of a balance shoe sole which is manufactured by injection moulding, wherein the subassembly of the shank and outsole are positioned inside a mould whereafter the midsole is produced by injection moulding.

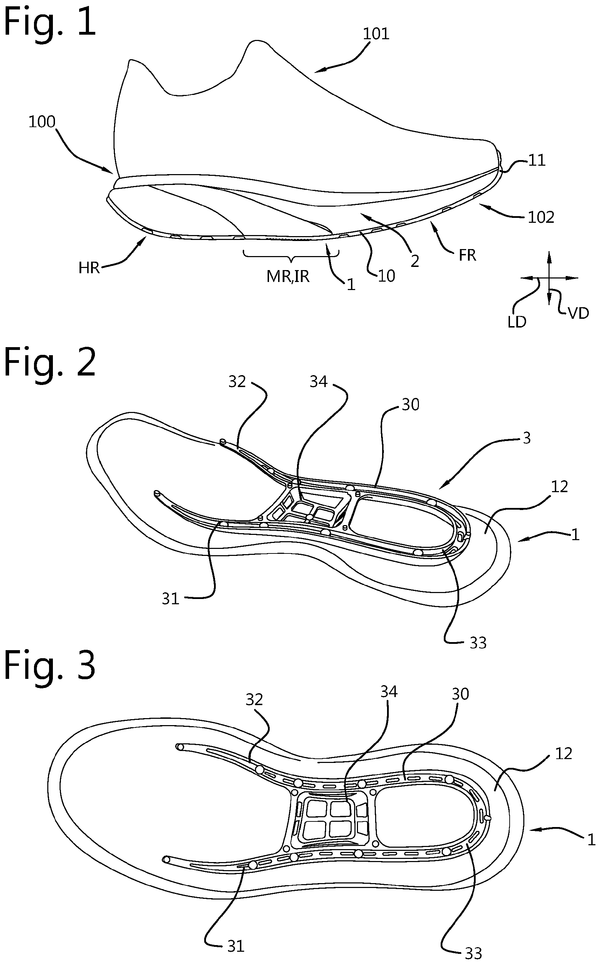

In fig.1-10, a balance footwear and balance footwear components are illustrated and referred by reference numbers in which identical reference signs are used in the drawings to indicate identical or functionally similar components.

Fig. 1 shows a prior art embodiment of a balance footwear 100 as presented in US2016/0345668 having an upper 101 and a shoe sole 102. The shoe sole extends in a longitudinal direction LD from a heel region HR through a midfoot region MR to a forefoot region FR. The shoe sole 102 comprises an outsole 1 and a midsole 2 which is stacked directly on the outsole. The outsole 1 has an outsole body 10 which has a lower surface 11 which defines a ground-contacting surface of the shoe sole. The outsole 1 has a downwardly convex shape and forms a convex bottom profile of the shoe sole 102. The bottom profile of the outsole 1 results in an impact region IR being the lowest point on the shoe sole as measured in a vertical direction VD when the shoe sole is at rest on a flat reference ground plane (i.e. a plane oriented perpendicular to the vertical direction). In this reference condition, the heel region HR and forefoot region FR of the shoe sole 102 are spaced above the impact region IR. When wearing this footwear 100, a user will experience a balancing effect when standing in an upright position.

In this prior art embodiment, the midsole 2 has three different cushion elements which are respectively positioned at the heel region HR, the midfoot region MR and the forefoot region FR. Here, a midfoot cushioning element is constructed from a relatively soft, elastic, and highly deformable material as compared to the forefoot and heel cushioning elements to provide a high amount of damping and shock absorption at the midfoot region MR.

In Figs. 2-10, shoe sole components are illustrated for manufacturing an embodiment of a balance footwear according to the invention. The shoe sole components form a subassembly for moulding the shoe sole with or without an upper 101 of the balance footwear. The subassembly is arranged to manufacture the shoe sole of the balance footwear by injection moulding. In the injection moulding process, a material is injected to form a midsole 2 of the shoe sole 102.

As shown in fig. 2-4, the subassembly includes an outsole 1 which has an outsole body 10 having a lower surface 11 which defines a ground-contacting surface of the shoe sole and an upper surface 12 for supporting the midsole.

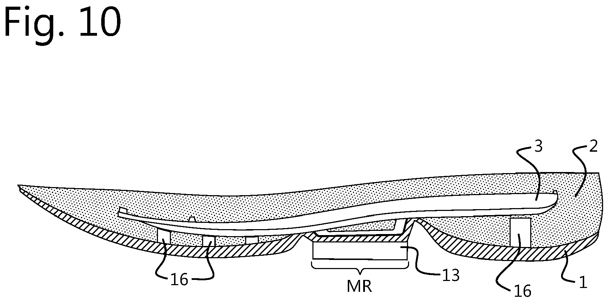

The subassembly further includes a shank 3 for stabilising a wearer's foot. The shank 3 is positioned on top of the outsole 1. After the injection moulding process, the shank 3 is embedded in the midsole of the shoe sole as shown in Fig. 10.

The shank 3 has a U-shaped shank body 30. The shank body 30 has a U-bend portion 33 and a first U-leg 31 and a second U-leg 32. In the subassembly, the U-bend portion 33 is positioned at the heel region HR and the first and second U-leg 31, 32 extend from the heel region HR through the midfoot region MR into the forefoot region FR.

At the midfoot region MR, the shank 3 comprises a bridge portion 34. The bridge portion 34 interconnects the first and second U-leg 31, 32.

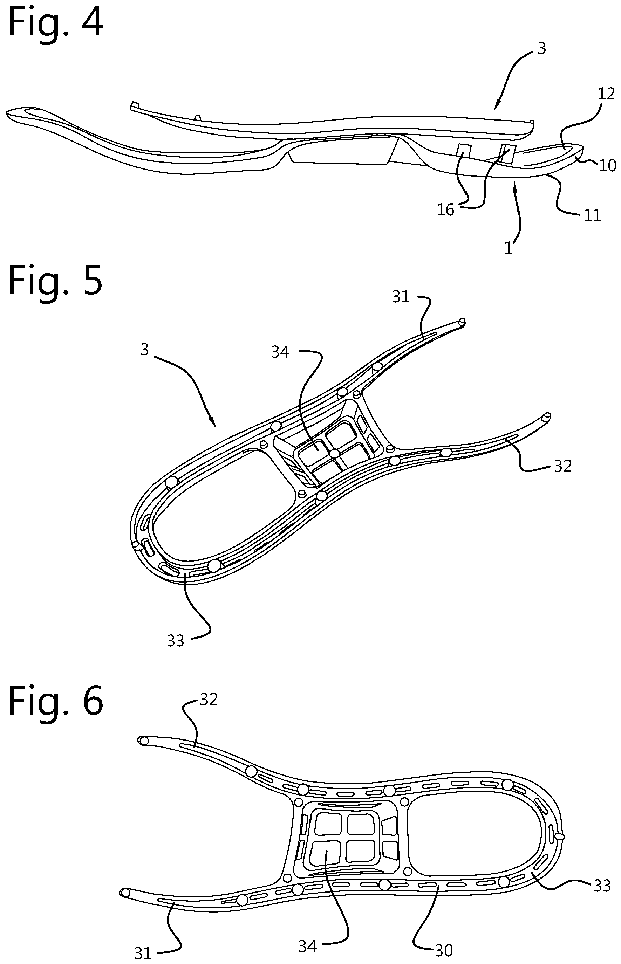

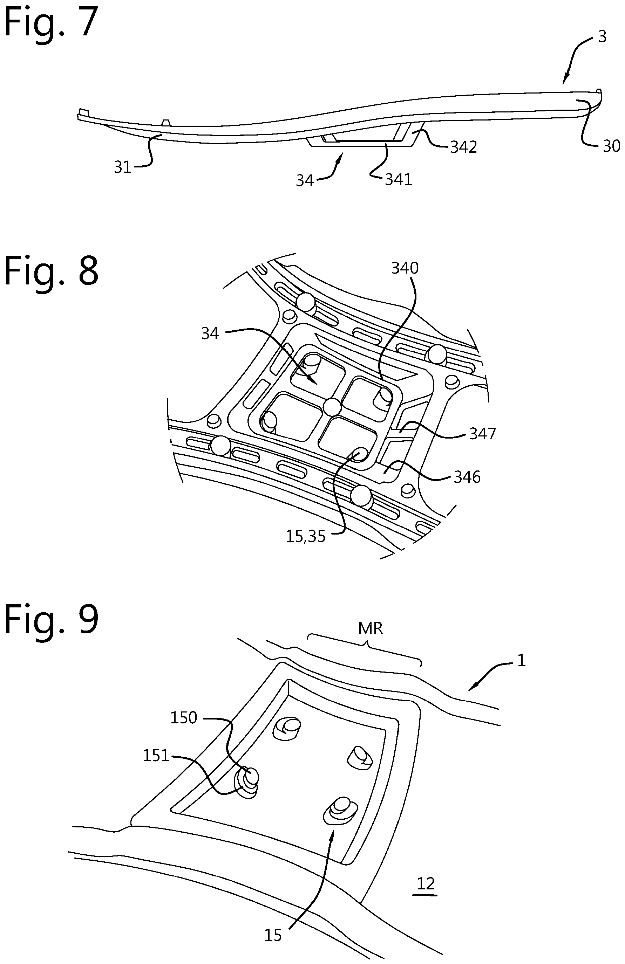

Fig. 5-7 show the shank 3 in further detail. As shown in the side view of fig. 7, the bridge portion 34 extends below the U-shaped shank body 30. The bridge portion 34 protrudes from the shank body 30 at the midfoot region MR. The bridge portion 34 is integral with the shank body 30. The U-shaped shank body 30 serves to distribute a wearer's load on the shoe sole 102. The bridge portion 34 of the shank 3 specifically functions to transfer the load from the wearer's foot to the impact region IR of the shoe sole. The bridge portion 34 contributes in supporting a wearer's foot arch.

Here, as shown, the bridge portion 34 is formed by a deepening 340. The deepening extends away from an imaginary plane formed by the U-shape of the shank body 30. The deepening is cup-shaped. The deepening 340 is open from above. The deepening has a bottom wall 341 and a circumferential sidewall 342.

Here, the deepening is box-shaped. The deepening 340 has a bottom wall 341, a left and right side wall which extend in the longitudinal direction LD and a front and rear wall transversely extending between the first and second U-leg 31, 32.

As shown in fig. 8, the deepening 340 is open worked. At least one aperture is provided in at least one of the bottom wall and circumferential wall. The aperture may have any shape. For example, the bottom wall and circumferential wall of the deepening may be perforated by circular apertures.

Here, a plurality of window shaped apertures are provided. The bottom wall may be open worked by several apertures. Here, the bottom wall includes four window shaped apertures. The four window shaped apertures together form a cross-bar in the bottom wall.

The circumferential side wall 342 may also be open worked. The left and right side wall and the front and rear side wall are open worked by apertures. The apertures provide a structure in which the bottom wall 341 is connected by several studs to the shank body 30. Here, the bottom wall 341 is connected by four corner studs 346 to the shank body 30. As shown, additional intermediate studs 347 may be provided at the front and rear sidewall of the deepening to contribute in rigidity for a load transfer from the shank body 30 to the bottom wall 341. The structure of the deepening 340 including the studs 345 in the side wall 342 is beneficial to obtain a lightweight but rigid structure for a load transfer to the impact region of the balance footwear.

As shown in fig. 4, the outsole further comprises at least one support member 16 for supporting the shank 3 onto the outsole 1. The at least one support member 16 is positioned at the heel region HR of the outsole for supporting the U-bend portion 33 of the shank. At least one additional support member 16 may be positioned at a forefoot region FR of the outsole to support respectively one of the first and second U-leg 31,32 of the shank. In particular, each support member 16 is pin-shaped. Each pin-shaped support member extends from the upper surface 12 of the outsole and has a pin end face for supporting the shank 3. As further shown in fig. 4, the shank 3 may be provided with several protrusions at a top surface of the shank body 20 to keep the shank body at a correct height level inside the mould to embed the shank in the midsole. Each protrusion forms a spacer to space the shank body 30 at a distance from a top side of the mould. Here, the distal ends of the first and second leg 31, 32 are each provided with a protrusion, and a protrusion is centrally positioned at the U-bend portion 33. As shown in fig. 5 and 6, the shank body 30 may have a double-walled U-bend shape. The U-bend portion 33, the first and second U-leg 31, 32 are double-walled. The double walled shape, or so called gutter shape, is formed by two parallelly extending interconnected upstanding walls. The double-walled shank body may have a substantially semi-circular cross-section. The double-walled structure contributes to obtain a lightweight but downwardly rigid structure of the U-leg.

As further shown in fig. 6, the double-walled shank body 30 may be open worked. In particular, a bottom section of the shank body 30 is open worked by multiple apertures, in particular by a series of through slots.

Fig. 8 and 9 show an alignment of the shank 3 relative to the upper surface 12 of the outsole 1. The bottom wall 341 of the bridge portion 34 comprises at least one alignment member 35 and the outsole 1 comprises at least one complimentary alignment member 15 to accurately position the shank 3 relative to the outsole 1. The shank 3 is constrained in the longitudinal direction LD and constrained in rotation about a vertical axis by the pair of alignment members 15, 35 to obtain an accurately positioned load transfer from a users foot to the impact region of the outsole.

Here, the alignment member 35 comprises a first, second, third and fourth alignment member formed by a precise dimensioning of an aperture in the bottom wall 341 of the bridge portion. The aperture has a rectangular shape and rounded aperture corners. The rounded aperture corners function to accurately position the shank 3. A first, second, third and fourth complimentary alignment member are provided at the upper surface of the outsole. Here, each complimentary alignment member 15 is formed by a positioning pin 150 having a narrowed pin head to be received in the respective rounded aperture corner of the bottom wall 341. Four narrowed pin heads of the complimentary alignment members together provide a rotational constraint. The positioning pin has a pin body with a supporting face for supporting the bridge portion 34 on top of the pin body. Herewith, the positioning pin determines a height level of the shank 3 relative to the outsole 1.

Fig. 10 shows a balance shoe sole 102 which is formed by an injection moulding process. In the injection moulding process, a subassembly of an outsole 1 and a shank 3 as shown in fig. 2-4 is placed into a mould, whereafter an injection moulding material is supplied to form a midsole 2. After the injection moulding process, the shank 3 is embedded in the midsole 2.

Preferably, the midsole is made by a single material, in particular a thermoplastic polyurethane (TPU) material. The midsole 2 provides a dampening to a wearer's heel and forefoot, while the shank 3 including the bridge portion 34 provides a support to the wearer's midfoot, in particular the foot arch. Herewith, a balance shoe sole can be made by some relative simple steps in an injection moulding process. In the injection moulding process, a balance shoe sole 102 can be manufactured as a separate product. It is further possible in the injection moulding process to co-mold the subassembly of the outsole and the shank with an upper 101 to directly obtain a balance footwear 100.

Numerous variants are possible in addition to the embodiment shown in the figures. For example, in a variant of the illustrated embodiment of the shank, an alternative embodiment of the shank may be open worked in a different manner, e.g. by perforations in the deepening which forms the bridge portion.

Although the present invention has been described in detail, it will be apparent to those skilled in the art that various changes and modifications can be made without departing from the scope of the invention as hereinafter claimed. It is intended that all such changes and modifications be encompassed within the scope of the present disclosure and claims.

Further, it is remarked that any feature of the system according to the invention which is described in the embodiments and/or mentioned in the dependent claims is in itself considered patentable without any dependency to another presented feature. In particular, any measure presented in a dependent claim is also considered patentable without dependency of the independent claim.

### Reference signs list:

| | | | |
|---|---|---|---|
| HR | heel region | 2 | midsole |
| FR | forefoot region | 20 | midsole body |
| MR | midfoot region | 22 | midsole upper surface |
| IR | impact region | | |
| LD | longitudinal direction | 3 | shank |
| VD | vertical direction | 30 | shank body |
| | | 31 | first U-leg |
| | | 32 | second U-leg |
| 100 | balance footwear | 33 | U-bend portion |
| 101 | upper | 34 | bridge portion |
| 102 | shoe sole | 340 | deepening |
| | | 341 | bottom wall |
| 1 | outsole | 342 | circumferential sidewall |
| 10 | outsole body | 344 | sidewall window |
| 11 | lower surface; ground-contacting surface | 345 | stud |
| 12 | upper surface | 346 | corner stud |
| 13 | balance body; balance pad | 347 | intermediate stud |
| 15 | complimentary alignment member | 35 | alignment member |
| 150 | pin | | |
| 151 | pin head | | |
| 16 | support member | | |

## Claims

1. Balance footwear (100) which is configured to be manufactured by injection moulding, which balance footwear comprises an upper (101) and a shoe sole (102) which extends in a longitudinal direction (LD) from a heel region (HR) through a midfoot region (MR) to a forefoot region (FR), wherein the shoe sole has an convex bottom profile such that an impact region (IR) of the shoe sole is defined in the midfoot region (MR), the shoe sole comprises an outsole (1), a midsole (2) and a shank (3) embedded in the midsole (2), wherein:
- the outsole (1) has an outsole body (10) having a lower surface defining a ground-contacting surface of the shoe sole and an upper surface for supporting the midsole;
- the midsole (2) has a midsole body (20) being connected to the outsole (1) by injection moulding and wherein the midsole (2) has a midsole upper surface (22) for attachment to at least one of an insole and the upper; and
- the shank (3) for stabilising a wearer's foot is embedded in the midsole (2), wherein the shank (3) has a U-shaped shank body (30) including a U-bend portion (33) being positioned at the heel region (HR), a first U-leg (31) and a second U-leg (32) extending from the heel region (HR) through the midfoot region (MR) into the forefoot region (FR), wherein the shank (3) has a bridge portion (34) at the midfoot region (MR) which interconnects the first and second U-leg (31, 32), **characterised in that** the bridge portion (34) protrudes below the U-shaped shank body (30), wherein the bridge portion (34) of the shank (3) is formed by a deepening (340) which is open from above.

2. Balance footwear (100) according to claim 1, wherein in a subassembly of the outsole (1) and the shank (3), the bridge portion (34) of the shank (3) is in abutting engagement with the outsole (1).

3. Balance footwear (100) according to claim 2, wherein the bridge portion (34) comprises at least one alignment member (35), in particular an alignment aperture, to position the bridge portion (34) relative to a complimentary alignment member (15) being positioned at the midfoot region (MR) of the upper surface of the outsole (1).

4. Balance footwear (100) according to claim 3, wherein the complementary alignment member (15) at the upper surface of the outsole (1) is formed by a positioning pin (150), in particular a positioning pin having a narrowed pin head (151).

5. Balance footwear (100) according to any of the claims 1 - 4, wherein the outsole (1) further comprises at least one support member (16) for supporting the shank (3) onto the outsole (1), wherein in particular the at least one support member (16) is arranged to support a U-leg (31, 32) of the shank (3).

6. Balance footwear (100) according to any of the preceding claims, wherein the bridge portion (34) of the shank (3) is integral with the shank body (30).

7. Balance footwear (100) according to claim 1, wherein the deepening (340) is open worked by at least one aperture.

8. Balance footwear (100) according to claim 1 or 7, wherein the deepening (340) is box-shaped including a bottom wall (341) and a circumferential side wall (342).

9. Balance footwear (100) according to claim 8, wherein the circumferential sidewall (342) of the deepening has at least one aperture, in particular a window shaped aperture (344), forming several studs (345), in particular several corner studs (346), for a load transfer from the shank body (30) through the studs (345) to the bottom wall of the bridge portion (34).

10. Balance footwear (100) according to any of the preceding claims, wherein the shank (3) is made of a plastic material, in particular a thermoplastic polyurethane (TPU) material.

11. Balance footwear (100) according to any of the preceding claims, wherein the outsole (1) comprises a balance body (13), in particular a balance pad, on the ground-contacting surface which balance body (13) is positioned at the midfoot region (MR).

12. Shank (3) for manufacturing a balance footwear by injection moulding of a midsole, wherein the shank comprises a U-shaped shank body (30) including a U-bend portion (33) to be positioned at a heel region (HR), a first U-leg (31) and a second U-leg (32) to extend from the heel region through a midfoot region into a forefoot region of a shoe sole, wherein the shank has a bridge portion (34) at the midfoot region (MR) which interconnects the first and second U-leg (31, 32), **characterised in that** the bridge portion (34) protrudes below the U-shaped shank body (30).

13. Balance shoe sole (102) formed by injection moulding, wherein the balance shoe sole extends in a longitudinal direction (LD) from a heel region (HR) through a midfoot region (MR) to a forefoot region (FR), wherein the balance shoe sole has an convex bottom profile such that an impact region (IR) of the balance shoe sole is defined in the midfoot region (MR), the balance shoe sole comprises an outsole (1), a midsole (2) and a shank (3) embedded in the midsole (2), wherein:
- the outsole (1) has an outsole body (10) having a lower surface defining a ground-contacting surface of the shoe sole and an upper surface for supporting the midsole;
- the midsole (2) has a midsole body (20) being connected to the outsole (1) by injection moulding and wherein the midsole (2) has a midsole upper surface (22) for attachment to at least one of an insole and the upper; and
- the shank (3) for stabilising a wearer's foot is embedded in the midsole (2), wherein the shank (3) has a U-shaped shank body (30) including a U-bend portion (33) being positioned at the heel region (HR), a first U-leg (31) and a second U-leg (32) extending from the heel region (HR) through the midfoot region (MR) into the forefoot region (FR), wherein the shank (3) has a bridge portion (34) at the midfoot region (MR) which interconnects the first and second U-leg (31, 32), **characterised in that** the bridge portion (34) protrudes below the U-shaped shank body (30).

14. Method for manufacturing a balance shoe sole (102) according to claim 13 or balance footwear (100) according to any of the claims 1-11 by injection moulding comprising the steps of:
- placing a subassembly of an outsole (1) and a shank (3) in a mould, wherein the shank (3) has a bridge portion (34) which extends below a U-shaped shank body (30);
- supply an injection moulding material into the mould to form a midsole (2) on the outsole (1) and to enclose the shank (3);
- opening the mould for releasing a formed balance shoe sole or balance footwear.

15. Method according to claim 14, wherein in the subassembly, the bridge portion (34) of the shank (3) rests upon an upper surface (12) of the outsole (1), wherein in particular in the subassembly, an engagement of the bridge portion (34) to the outsole (1) outlines the shank (3) relative to the outsole (1).
